# EUROPÄISCHE PATENTSCHRIFT

(11) **EP 2 648 022 B1**
(45) Veröffentlichungstag und Bekanntmachung des Hinweises auf die Patenterteilung: **08.03.2017**
(21) Anmeldenummer: 12002391.6
(22) Anmeldetag: 02.04.2012
(51) Int. Cl.: G01V 8/10, E05F 15/00

(54) **Überwachungsvorrichtung und Schwenktür**
Monitoring device and pivoting door
Dispositif de surveillance et porte pivotante

(43) Veröffentlichungstag der Anmeldung: 09.10.2013
(73) Patentinhaber: Cedes AG, 7302 Landquart (CH)
(72) Erfinder: De Coi, Beat, 7320 Sargans (CH); Leutenegger, Tobias, 7000 Chur (CH)
(74) Vertreter: Otten, Roth, Dobler & Partner mbB Patentanwälte

(56) Entgegenhaltungen:
- EP-A2- 1 375 808
- WO-A1-00/08286
- WO-A2-2009/090097
- DE-A1-102008 044 990
- US-A- 3 852 592
- US-A- 4 565 029

## Beschreibung

Die Erfindung betrifft eine Überwachungsvorrichtung nach dem Oberbegriff des Anspruchs 1 sowie eine Schwenktür nach dem Oberbegriff des Anspruchs 9.

Aus dem Stand der Technik sind Schwenktüren bekannt, welche um eine vertikale Drehachse drehbar gelagert sind und zudem einen motorischen Antrieb aufweisen. Oftmals sind diese Schwenktüren mit einem Öffnungssensor ausgestattet, dessen Steuerung bei Detektion einer sich nähernden Person die Tür mittels des motorischen Antriebs öffnet. Zudem sind bei derartigen Schwenktüren so genannte Sicherheitssensoren bekannt, welche die Schwenktüre in ihrer Bewegung stoppen, sobald ein Objekt detektiert wird, dass mit der sich öffnenden Türe kollidieren könnte. Aus der DE 10 2008 044 990 A1 ist zum Beispiel ein Sensor bekannt, welcher außerhalb des Türflügels derart angeordnet ist, dass der Türflügel im Wirkfeld des Sensors liegt bzw. in das Wirkfeld des Sensors gelangt.

Aus der US 4 565 029 A ist eine automatische Türanlage bekannt, welche eine Überwachungsvorrichtung zur Überwachung der Bewegung eines um die Drehachse verschwenkbar gelagerten und mittels eines Antriebs angetriebenen Bewegungselementes aufweist, wobei der Sensor im Bereich der Drehachse montiert und zur Erfassung eines Objektes und zur Überwachung eines Raumwinkels vorgesehen ist; der Sensor ist jedoch als optischer Sensor ausgebildet und funktioniert ferner nach dem Prinzip, dass die Sendeelemente des Sensors jeweils entsprechend deaktiviert werden, wenn sich die Tür beim Verschwenken durch den Erfassungsbereich bewegt.

Aufgabe der Erfindung ist es, eine Überwachungsvorrichtung vorzuschlagen, bei der die Fehleranfälligkeit im Betrieb verbessert werden kann.

Die Aufgabe wird, ausgehend von einer Überwachungsvorrichtung der eingangs genannten Art bzw. durch eine Schwenktür der eingangs genannten Art, durch die kennzeichnenden Merkmale des Anspruchs 1 sowie des Anspruchs 9 gelöst.

Durch die in den abhängigen Ansprüchen genannten Maßnahmen sind vorteilhafte Ausführungen und Weiterbildungen der Erfindung möglich.

Dementsprechend umfasst eine erfindungsgemäße Überwachungsvorrichtung zur Überwachung der Bewegung eines um eine Drehachse verschwenkbar gelagerten und mittels eines Antriebs angetriebenen Bewegungselementes einen Sensor zur Erfassung eines Objektes und zur Überwachung eines Raumwinkels. Das Bewegungselement ist zwischen einem geöffneten und einem geschlossenen Zustand einer zu verschließenden Öffnung verschwenkbar. Dabei handelt es sich beispielsweise um eine Schwenktür, die einen Zugang zu einem Raum ermöglicht, wobei die Öffnung, welche zu dem Raum führt, mittels des Türelementes verschlossen werden kann. Die drehbare Lagerung kann bei einer Schwenktür beispielsweise über ein Türband erfolgen. Durch die Anbringung des Türbandes ist eine Drehachse definiert. Das Bewegungselement selbst, beispielsweise das Türelement, wird mittels eines Motors um die Drehachse beim Öffnen bzw. beim Schließen bewegt.

Bei der erfindungsgemäßen Überwachungsvorrichtung ist der Sensor im Bereich der Drehachse montierbar. Durch diese Maßnahme kann erzielt werden, dass der zu überwachende Raumwinkel so angeordnet ist, dass dessen Ursprung im Bereich der Drehachse liegt. Der Begriff Raumwinkel im Sinne der Erfindung umfasst nicht zwingend einen kegelförmigen Raumwinkel. Vielmehr ist mit dem Begriff Raumwinkel im Sinne der Erfindung ein Bereich des Raumes gemeint, der dadurch festgelegt ist, dass der Ursprung, also die Stelle, an der sich der Empfänger bzw. Sender befindet, über eine geradlinige Verbindung bzw. einen Strahl mit allen Punkten dieses Raumbereichs bzw. Raumwinkels verbunden werden kann. Es kann sich bei dem Raumwinkel also auch beispielsweise um einen Kegel handeln, bei dem ein Segment entlang der Längsachse durch die Mantelfläche hindurch herausgetrennt wurde.

Der Sensor selbst umfasst einen Sender und einem Empfänger zum Aussenden bzw. Empfangen elektromagnetischer Detektionsstrahlung. Vorzugsweise handelt es sich bei der elektromagnetischen Strahlung um Infrarotlicht (IR). Denkbar ist grundsätzlich aber auch die Verwendung von ultraviolettem Licht (UV) oder von sichtbarem Licht (Wellenlänge ca. 400 nm bis 800 nm, mit nm: Abkürzung für Nanometer). Sender und Empfänger können in einem gemeinsamen Gehäuse des Sensors angeordnet sein.

Das Licht kann grundsätzlich innerhalb des entsprechenden Raumwinkels ausgestrahlt werden; in der Regel wird das Licht aber über einen größeren Bereich in den Raum ausgestrahlt. Ferner erfolgt meistens der Empfang bzw. die Detektion von elektromagnetischer Strahlung lediglich innerhalb des zu überwachenden Raumwinkels. Der Empfänger ist also in der Regel so ausgebildet bzw. ausgerichtet, dass der entsprechende, zu überwachende Raumwinkel erfasst wird, jedoch kein weiterer Bereich, der darüber hinausgeht. Sobald der Empfänger die elektromagnetische Strahlung detektiert, gibt er Detektionssignale aus. Es handelt sich dabei beispielsweise um elektrische Signale. Denkbar ist allerdings auch, dass diese beispielsweise in optische Signale (z. B. mit einer Leuchtdiode oder IR-Diode) umgewandelt und zur Verfügung gestellt werden.

Darüber hinaus umfasst die Überwachungsvorrichtung eine Auswerteeinheit, die zur Auswertung der Detektionssignale in Abhängigkeit von deren Position im Raumwinkel ausgebildet ist. Das bedeutet, dass mittels des Empfängers festgestellt werden kann, aus welcher Richtung die detektierten Signale kommen. Gegebenenfalls kann auch bestimmt werden, welche Entfernung das entsprechende, detektierte Objekt vom Empfänger hat, beispielsweise durch eine Laufzeitmessung. Wird also ein Objekt erfasst, so ist auch dessen Position bestimmbar. Das entsprechende Detektionssignal enthält diese entsprechenden Informationen, dass heißt, ob ein Objekt überhaupt detektiert wird und welche Position es innerhalb des Raumwinkels besitzt.

Der Sensor ist im Bereich der Drehachse so montierbar, dass das Bewegungselement bei seiner Bewegung um die Drehachse zumindest in den erfassten Raumwinkel eindringt, bzw. diesen wenigstens teilweise passiert.

Die Auswerteeinheit ist bei der erfindungsgemäßen Überwachungsvorrichtung dazu ausgebildet, in Abhängigkeit von der aktuellen Winkelposition des Bewegungselementes zwischen dem Bewegungselement und einem Objekt zu unterscheiden. Die Auswerteeinheit ist also dazu ausgebildet, Signale zu empfangen, die eine Information über die aktuelle Winkelposition des Bewegungselements in irgendeiner Form enthalten können. Es kann sich dabei um eine direkte Übermittlung der Winkelposition handeln. Denkbar ist aber auch, dass die entsprechende Winkelposition in irgendeiner Form kodiert ist.

Denkbar ist, dass die Winkelposition gemessen wird und dann an die Auswerteeinheit übermittelt wird oder aber, dass die Winkelposition bereits zur Verfügung steht und lediglich übermittelt wird. Dadurch, dass die Auswerteeinheit die aktuelle Winkelposition des Bewegungselementes bei der Auswertung mit berücksichtigt, wird ermöglicht, das Bewegungselement innerhalb des erfassten Raumwinkelbereichs auszublenden. Durch diese Maßnahme können "Fehldetektionen" vermieden werden, weil die Unterscheidung ermöglicht ist, die Tür im Fall eines öffnungssensors nur dann zu öffnen, wenn tatsächlich eine Person sich der Tür nähert bzw. im Fall eines Sicherheitssensors die Bewegung dann anzuhalten, wenn auch tatsächlich eine Kollisionsgefahr mit dem Bewegungselement besteht. Es wir so vermieden, dass die Detektion der Türe selbst vom Sensor als Objekt oder Person interpretiert wird. Wird vom Empfänger ein Strahlungssignal detektiert, so kann diese eine Position im zu erfassenden Raumwinkel zugeordnet werden. Das ausgegebene Detektionssignal, das an die Auswerteeinheit übergeben wird, trägt diese Information. Die Auswerteeinheit verwendet zur Auswertung die aktuelle Winkelposition des Bewegungselementes. Der Winkelbereich, der dem Bewegungselement in seiner aktuellen Position zugeordnet werden kann, kann ausgeblendet werden, das heißt, dieser Bereich wird entweder bei der Auswertung nicht berücksichtigt oder es wird angenommen, dass eine Detektion in diesem Bereich vom Bewegungselement selbst und nicht von einem Objekt oder einer Person stammt.

Damit die Unterscheidung zwischen einem Objekt bzw. einer Person und dem Bewegungselement erfolgen kann, ist im Allgemeinen eine Zusatzinformation notwendig, welche diese Unterscheidung ermöglicht. Ist die Auswerteeinheit so ausgebildet, dass die aktuelle Winkelposition des Bewegungselementes unmittelbar von der Kontrollvorrichtung bzw. der Steuerung des Antriebs des Bewegungselementes übertragen wird, so ist die Zusatzinformation, dass es sich bei einem in diesem entsprechenden Winkelbereich befindenden Objekt um das Bewegungselement handelt dadurch gegeben, dass die Winkelposition von der Kontrollvorrichtung des Antriebs übermittel wurde. Soll die aktuelle Winkelposition allerdings direkt von der Überwachungsvorrichtung bzw. dem Sensor der Überwachungsvorrichtung geliefert werden, so ist eine Zusatzinformation notwendig, die das detektierte Objekt als Bewegungselement ausweist.

Bei einer vorteilhaften Ausführungsform der Erfindung ist der Sensor zur Erfassung des Objekts und zur Überwachung des Raumwinkels als Entfernungssensor zur Bestimmung der Entfernung eines Objekts ausgebildet. Insbesondere kann es sich bei einem solchen Sensor um einen Time-of-flight-Sensor (ToF-Sensor) handeln. Ein solcher ToF-Sensor arbeitet mittels eines Laufzeitmessers. Beispielsweise wird auf das vom Sensor mittels des Senders ausgesandte Lichtsignal ein anderes Signal bzw. eine Frequenz aufmoduliert, welche im Vergleich zur Lichtfrequenz niederfrequent ist. Das über Reflexionen wieder im Empfänger empfangene Signal weist dann eine Phasenverschiebung zum ausgesandten Licht auf, welche bestimmbar ist und eine Information über die Laufzeit enthält. Derartige Sensoren bieten den Vorteil, dass sie besonders günstig sind und daher Kostenvorteile ermöglichen. Zudem bieten Entfernungssensoren die Möglichkeit, die Entfernung eines detektierten Objektes vom Sensor zu bestimmen, was in vorteilhafterweise bei der vorliegenden Erfindung ausgenutzt werden kann, um zu erfahren, ob eine Kollision des Bewegungselementes mit dem Objekt zu befürchten ist, bzw. ob die Tür geöffnet werden muss, weil eine Person sich der Tür nähert. Darüber hinaus kann der ToF-Sensor auch als 3D-Sensor ausgebildet sein.

Die Winkelposition allein ist zum Erhalt dieser Information nicht immer ausreichend, zumal beispielsweise eine Person, die vergleichsweise weit von dem Bewegungselement beabstandet ist, nicht mit der sich öffnenden Tür kollidiert bzw. kollidieren kann. Es wird somit ermöglicht, den eigentlichen Bewegungsraum des Bewegungselementes und dessen Verlängerung darüber hinaus mittels des Sensors der Überwachungsvorrichtung zu erfassen. Die Auswerteeinheit kann beispielsweise die Information bei einer Schwenktür haben, in welchem Radius das Bewegungselement sich öffnet. Ein Objekt, das weiter vom Sensor beabstandet ist als dieser Radius, kann regelmäßig keine Kollisionsgefahr begründen.

Ein automatisches Öffnen der Tür erfolgt unter anderem mittels einer Kontrollvorrichtung zur Kontrolle des Antriebs des Bewegungselementes und des Antriebs selbst. Bei dem Antrieb handelt es sich in der Regel um einen Motor, mit dem die Tür, insbesondere eine Schwenktür, geöffnet werden kann. Kontrolle im Sinne der Erfindung bedeutet Steuerung und/oder Regelung. Die Kontrollvorrichtung erhält beispielsweise ein Signal von einem Sensor, beispielsweise einem Öffnungssensor, dass eine Person sich der Tür nähert, sodass entsprechend die Kontrollvorrichtung den Motor ansteuert und das Bewegungselement in Bewegung gesetzt wird, das heißt in einen geöffneten Zustand bewegt wird. Die Kontrollvorrichtung kann des Weiteren mit einer Sicherheitsvorrichtung bzw. einem Sicherheitssensor verbunden sein, sodass dann, wenn dieser ein Objekt detektiert, mit dem eine Kollision mit dem Bewegungselement zu befürchten ist, die Bewegung der Tür stoppt. Dabei kann gegebenenfalls auch das Öffnungssignal eines öffnungssensors übersteuert werden, da die Vermeidung einer Kollision im Allgemeinen Vorrang gegenüber dem Öffnen der Tür besitzt. In den meisten Fällen kann aus dieser Kontrollvorrichtung die aktuelle Winkelposition des Bewegungselementes ausgelesen werden. Die Winkelposition kann grundsätzlich auf verschiedene Weise erhalten werden. Denkbar ist beispielsweise, dass der Motor bzw. der Antrieb einen eigenen Drehgeber bzw. Winkelgeber besitzt, über den die Information über den aktuellen Winkel des Bewegungselementes ausgelesen werden kann.

Ferner ist denkbar, dass die Zeit oder ein Maß für die Zeit, in welcher der Motor aktuell das Bewegungselement bereits angetrieben hat, bestimmt bzw. ausgelesen wird und diese Information als Maß für die aktuelle Winkelposition verwendet wird. Denkbar ist auch, dass die Kontrollvorrichtung einen eigenen Winkelgeber besitzt, der die aktuelle Winkelposition des Bewegungselementes bestimmt. Bei einer einfachen Ausgestaltung der Erfindung ist daher eine Übertragungsvorrichtung vorhanden, welche die Kontrolleinheit mit der Auswerteeinheit verbindet und die aktuelle Winkelposition entsprechend übermittelt. Denkbar ist darüber hinaus, dass die Auswerteeinheit unmittelbar mit dem Motor bzw. dem Antrieb selbst verbunden ist sofern die aktuelle Winkelposition auch direkt vom Motor ausgelesen werden kann.

Auch die Übertragungseinheit kann auf verschiedene Art und Weise gestaltet sein. Denkbar ist beispielsweise, dass es sich bei der Übertragungseinheit lediglich um ein Datenkabel handelt, dass die Kontrollvorrichtung und/oder den Antrieb mit der Auswerteeinheit verbindet. Dies ist beispielsweise dann ausreichend, wenn Auswerteeinheit einerseits und Kontrollvorrichtung bzw. Antrieb andererseits eine Schnittstelle umfassen, welche die unmittelbare Ausgabe bzw. das unmittelbare Einlesen dieser Information ermöglichen. Denkbar ist aber auch, dass innerhalb der jeweiligen Schaltkreise ein elektrisches Signal abgegriffen wird, dass diese Information beinhaltet. Grundsätzlich kann unmittelbar die Winkelposition ausgelesen werden oder das entsprechende Signal enthält gegebenenfalls die Position in einer kodierten Form. Besonders vorteilhaft ist an dieser Ausführungsform, dass die Information über die aktuelle Winkelposition des Bewegungselementes unabhängig von einem Sensor der Überwachungsvorrichtung erhalten wird. Zudem ist diese Ausgestaltung vergleichsweise günstig, weil in der Regel lediglich eine Verbindung zur Kontrolleinheit bzw. zum Antrieb hergestellt werden muss.

Eine weitere Ausgestaltung ermöglicht eine drahtlose Übermittlung der aktuellen Winkelpositionen. Denkbar ist beispielsweise auch, dass die Winkelposition per Funk übermittelt wird. Durch diese Ausgestaltung wird ermöglicht, dass störende Kabel vermieden werden können und auch eine kompaktere Bauweise mit Platzeinsparungen ermöglicht wird.

Die Übertragungsvorrichtung kann allerdings auch als Kommunikationsvorrichtung ausgebildet sein, das heißt eine Vorrichtung, die zum Empfangen und Aussenden von Befehlen ausgebildet ist. Denkbar ist beispielsweise, dass Kontrollvorrichtungen bzw. Antrieb und Auswerteeinheit über einen Bus miteinander kommunizieren. Denkbar ist ferner, dass ein Austausch von Daten ermöglicht wird, aber auch grundsätzlich dass die Daten nur in eine Richtung fließen. Beispielsweise kann die Auswerteeinheit in regelmäßigen Abständen über entsprechende Befehle an die Übertragungsvorrichtung aktuelle Winkelpositionen des Bewegungselementes anfordern. Die Übermittlungsvorrichtung schickt dann wiederum Befehle an den Antrieb oder die Kontrollvorrichtung, die daraufhin die aktuelle Winkelposition liefert und diese schließlich an die Auswerteeinheit übermittelt wird. Es besteht darüber hinaus die Möglichkeit, dass, wie bereits oben beschrieben, die Übermittlungsvorrichtung lediglich in einer Verbindung zur Kontrollvorrichtung bzw. zum Antrieb besteht und die Anforderung der Auswerteeinheit direkt an die Kontrollvorrichtung bzw. den Antrieb übergeben wird.

Ob die Übermittlungsvorrichtung als separate Schaltung oder lediglich als Kabel ausgebildet ist, hängt beispielsweise davon ab, ob Auswerteeinheit und Kontrollvorrichtung bzw. Antrieb unmittelbar miteinander kommunizieren können. Ist dies nicht der Fall, da beispielsweise beide Baueinheiten zu einem anderen Hersteller geliefert werden, kann es vorteilhaft sein, eine Übertragungsvorrichtung vorzusehen, die eine derartige Kommunikation bzw. einen derartigen Datenlauf ermöglicht. Auch eine derartige Kommunikation zwischen Auswerteeinheit, Übertragungseinheit und Kontrollvorrichtung/Antrieb kann per Funk vonstatten gehen.

Eine Möglichkeit, die aktuelle Winkelposition des Bewegungselementes zu bestimmen, besteht darin, festzustellen, über welche Zeitspanne der Antrieb bzw. der Motor bereits in Betrieb ist. Sofern die Geschwindigkeit des Motors nämlich bekannt ist, ist daraus die aktuelle Winkelposition des Bewegungselementes unmittelbar ableitbar. Wird die Winkelposition allerdings auf diese Art und Weise bestimmt, so kann es zu entsprechenden Abweichungen der tatsächlichen Winkelposition des Bewegungselementes von der über die Zeit bestimmte Winkelposition kommen, wenn beispielsweise die angenommene Geschwindigkeit des Motors mit der tatsächlichen Geschwindigkeit nicht übereinstimmt. Die Folge davon wäre, dass schließlich von der Überwachungseinrichtung ein Bereich ausgeblendet würde, der nicht der tatsächlichen Position des Bewegungselementes entspricht. Dies wiederum könnte dazu führen, dass entweder die Bewegung des Bewegungselementes gestoppt wird, obwohl tatsächlich kein Objekt eine Kollision verursachen könnte, weil das Bewegungselement selbst fälschlicherweise für ein solches Objekt gehalten wird oder im Falle eines Öffnungssensors, dass die Tür geöffnet wird, obwohl keine Person in dem entsprechenden Bereich in der Nähe der Tür sich befindet, jedoch das Bewegungselement für eine solche sich nähernde Person gehalten wird. Umgekehrt besteht wiederum die Gefahr, dass ein Objekt oder eine sich nähernde Person für das Bewegungselement gehalten wird und auf diese Weise es doch zu einer Kollision mit dem Bewegungselement kommen kann, oder aber die Tür nicht oder erst zu spät geöffnet wird. Dementsprechend kann es vorteilhaft sein, eine separate Winkelmessvorrichtung vorzusehen, welche die aktuelle Winkelposition des Bewegungselements bestimmt. Es kann sich bei einer derartigen Winkelmessvorrichtung um einen im Antrieb bzw. im Motor integrierten Winkelgeber handeln, denkbar ist aber auch ein separater Sensor, der die Winkelposition des Bewegungselementes bestimmt. Die Winkelmessvorrichtung kann über eine mechanische Kopplung arbeiten.

Denkbar ist bei einem Ausführungsbeispiel der Erfindung, dass die Winkelmessvorrichtung einen Hebel umfasst, der an das Bewegungselemente mechanisch gekoppelt ist, zum Beispiel drehbar gelagert ist. Ferner ist die Winkelmessvorrichtung sodann dazu ausgebildet, mittels der Verschiebung des Hebels bei Bewegung des Bewegungselementes die Winkelposition des Bewegungselementes zu erfassen. Bei einer Schwenktür kann der Hebel beispielsweise die Rotationsbewegung ebenfalls zusammen mit dem Bewegungselement ausführen. Denkbar ist aber beispielsweise auch, dass der Hebel sensorseitig in einer Kulisse geführt wird und somit die Schwenkbewegung in eine Linearbewegung umgewandelt wird. Entscheidend ist, dass der entsprechenden Position des Hebels eindeutig eine Winkelposition des Bewegungselementes zugeordnet werden kann. Die Winkelmessvorrichtung erkennt in diesem Fall, in welcher Position sich der Hebel befindet. Der Hebel dient gewissermaßen als Messfühler. Eine derartige Ausführungsform kann ebenfalls kostengünstig und zuverlässig realisiert werden.

Die Winkelmessvorrichtung kann allerdings auch optisch arbeiten. Denkbar sind hier im Wesentlichen zwei Ausführungsformen, nämlich zum einen, dass die Winkelmessvorrichtung als optischer Entfernungssensor ausgebildet ist, der die Winkelposition des Bewegungselementes bestimmt. Ist der Entfernungssensor an einer festen Stelle angebracht, so ändert sich mit der Schwenkbewegung einer Schwenktür auch die Entfernung bzw. der Abstand zum Sensor. Diese Information kann in der Weise umgesetzt werden, dass die Entfernung eindeutig eine Winkelposition des Bewegungselementes zugeordnet werden kann.

Denkbar ist darüber hinaus eine andere optische Erfassungsmöglichkeit. Der optische Sensor kann beispielsweise einen Lichtstrahl aussenden, der an einer festgelegten Stelle der Schwenktür zumindest teilweise reflektiert wird und dann auf einen Empfänger trifft. Bei der Bewegung des Bewegungselementes, beispielsweise also bei dem Verschwenken der Tür ändert sich der Winkel des Bewegungselementes zum auftreffenden Strahl. Das reflektierte Signal wird somit in einem anderen Winkel reflektiert und trifft den Empfänger an einer anderen Stelle bzw. unter einem anderen Winkel. Diese Abweichung kann festgestellt werden. Bei einer vertikal drehbar gelagerten Tür kann beispielsweise ein in horizontaler Richtung verlaufender Strahl auf die Tür gerichtet werden, wobei die Reflektion dann horizontal und auf einer Linie ihre Position ändert. Als Lichtquelle kann beispielsweise ein LED-Spot verwendet werden (LED: englische Abkürzung von lightemitting diode, Leuchtdiode). Der Sensor kann beispielsweise einen Zeilensensor umfassen, der die Lage des Spots in Abhängigkeit von der Türöffnung ermittelt.

Die Winkelmessvorrichtung kann bei einer Weiterbildung der Erfindung allerdings auch in den Sensor selbst integriert sein, das bedeutet, die Winkelmessvorrichtung ist nicht als separater Sensor ausgebildet, sodass der Sensor zur Erfassung des Objektes und zur Überwachung des Raumwinkels zusätzlich die Funktion der Winkelmessvorrichtung besitzt zur Bestimmung der Winkelposition des Bewegungselementes. Auch dadurch können Kostenvorteile entstehen, da kein zusätzlicher Sensor vorgesehen werden muss; des Weiteren wird eine Platzersparnis ermöglicht. Entscheidend ist in diesem Zusammenhang, dass die Unterscheidung zwischen dem Bewegungselement und einem sonstigen Objekt erfolgen kann, indem eine zusätzliche Information übermittelt wird. Diese zusätzliche Information kann dadurch erlangt werden, dass ein empfangenes Signal eine charakteristische Form besitzt, sofern es vom Bewegungselement stammt. Denkbar ist beispielsweise, dass beim Einsatz von Entfernungssensoren wie zum Beispiel ToF-Sensoren eine charakteristische Entfernung der Tür festgestellt wird, beispielsweise dann, wenn das Türblatt mit der Detektionsstrahlung erfasst wird, das beim Verschwenken um den Sensor, der sich im Bereich der Drehachse befindet, einen konstanten Abstand zu diesem aufweist.

Denkbar ist jedoch auch, dass eine Markierungseinheit vorgesehen ist, die am Bewegungselement so anbringbar ist, dass sie bei der Bewegung des Bewegungselementes von der Winkelmessvorrichtung erfassbar ist. Die Markierungseinheit kann derart ausgebildet sein, dass sie aufgrund ihrer optischen Eigenschaften als Referenzmarkierung zur Bestimmung der Winkelposition des Bewegungselementes von der Auswerteeinheit erkennbar ist. Diese Referenzmarkierung kann in einfacher Weise so gestaltet sein, dass auszuschließen ist, dass es sich um kein Objekt oder eine Person handelt, die sich in dem entsprechenden Bereich aufhält. Die Markierungseinheit bietet darüber hinaus den Vorteil, dass sie praktisch universell eingesetzt werden kann. Wird die Markierungseinheit beispielsweise am Türblatt befestigt, so kann dies unauffällig erfolgen, sodass, selbst bei Verwendung von Glastüren, der Benutzer diese Markierung praktisch nicht wahrnimmt. Gerade dann, wenn die Überwachungsvorrichtung an bestehende Türsysteme nachgerüstet wird, ist eine solche Ausführungsform in der Regel unproblematisch, da sie an praktisch jedes Türsystem angebracht und mit jedem Türsystem verwendet werden kann. Idealerweise wird die Markierungseinheit am Türblatt bandseitig in der Nähe des Sensors befestigt z.b. unmittelbar an der bandseitigen Kante des Türblatts oder in einem Bereich bis zu 10 cm von der Türblattkante entfernt. Dadurch kann der ToF Sensor die Lage eine sprunghafte Änderung einer detektierten Entfernung als Mass für die Winkelstellung des Türblatts erkennen, wenn die Entfernung der charakteristischen Entfernung zwischen Sensor und Markierungseinheit entspricht.

Gegebenenfalls ist das Anbringen einer derartigen Markierungseinheit jedoch gar nicht notwendig. Denkbar ist ferner, dass der Sensor dazu ausgebildet ist, eine Stelle am Bewegungselement als Referenzmarkierung zur Bestimmung der Winkelposition des Bewegungselementes zur erfassen. Entscheidend ist bei dieser Ausführungsform, dass die entsprechende Stelle derartige optische bzw. Reflektionseigenschaften aufweist, dass die Auswerteeinheit zuverlässig eine solche Unterscheidung wahrnehmen kann. Denkbar ist, dass eine charakteristische Entfernung zum Türgriff oder eine charakteristische Reflexion vom Türgriff als entsprechende Stelle am Bewegungselement erkannt wird. Zum Beispiel kann der Türgriff vom Sensor erfasst werden. Besonders vorteilhaft an einer derartigen Ausführungsform, dass eine Markierungseinheit eingespart werden kann und somit in jedem Fall vermieden wird, dass die Markierungseinheit störend an der Tür auffällt.

In vielen Fällen ist die Anbringung einer Markierungseinheit gemäß einer Ausführungsform der Erfindung vorteilhaft, wenn aufgrund des steilen Winkels, in welchem ein Detektionsstrahl der Überwachungsvorrichtung auf das Bewegungselement trifft, kein oder nur ein sehr schwaches reflektiertes Signal wieder in den Empfänger der Überwachungsvorrichtung gelangen kann. Im schlechtesten Fall geht der Winkel gegen 180°. Da die Markierungseinheit so ausgebildet bzw. angebracht werden kann, dass das Signal in einem weniger steilen Winkel, idealerweise 90°, auf die Oberfläche trifft, ist eine höhere Intensität der Rückreflexion zu erwarten. Die Messung kann somit wesentlich verbessert werden.

Um eine entsprechende charakteristische Eigenschaft zu besitzen, kann die Markierungseinheit wenigstens teilweise eine diffus streuende Oberfläche aufweisen. Dadurch wird ermöglicht, dass in diesem erfassten Winkelbereich eine Stelle erfasst wird, die in das Licht im Verhältnis zu anderen Objekten oder Personen atypisch zurückwirft, nämlich diffus streut, womit das Bewegungselement erkennbar wird.

Denkbar ist grundsätzlich auch, dass eine umgekehrte Eigenschaft ausgenutzt wird, indem beispielsweise ein Reflexionselement vorgesehen wird, dass somit ein Signal zurückwirft, dass eine hohe Intensität aufweist. Diese Ausführung kann insbesondere dann verwendet werden, wenn der ToF-Sensor wie ein einfacher optischer Sensor, beispielsweise eine Photodiode, ein Phototransistor oder eine Quadrantendiode eingesetzt wird.

Die Überwachungsvorrichtung im Sinne der Erfindung kann zum einen als Sicherheitssensor, als Öffnungssensor oder als Sensor ausgebildet sein, der gleichzeitig die Funktion eines Sicherheitssensors und eines Öffnungssensors übernimmt.

Der Sicherheitssensor zielt auf das Stoppen der Bewegung des Bewegungselementes zur Vermeidung ungewollter Kollisionen mit dem Objekt ab, während der Öffnungssensor dem Öffnen des Bewegungselementes bei Annäherung des Objektes dient. Der Sensor kann allerdings auch beide Funktionen gleichzeitig wahrnehmen. Da die beiden Sensoren gewissermaßen unterschiedliche Zielrichtungen gewidmet sind, im einen Fall nämlich das in Gang setzen der Bewegung zum Öffnen des Bewegungselementes, im anderen Fall das Stoppen der Bewegung des Bewegungselementes, um eine Kollision zu vermeiden, ist auch hier eine strenge Unterscheidung notwendig, damit es nicht zu Fehlfunktionen führt. Eine zweckmäßige Unterscheidung besteht darin, dass das Überwachungsgebiet, das dem Öffnungssensor zugeordnet ist, ein anderes Überwachungsgebiet ist als das, welches dem Sicherheitssensor zugeordnet ist.

Das erste Überwachungsgebiet, welches dem Sicherheitssensor zugeordnet ist, ist regelmäßig näher an der eigentlichen Tür. Dieses erste Überwachungsgebiet umfasst in der Regel den Bewegungsbereich des Bewegungselementes, zumal in diesem Bereich grundsätzlich eine Kollisionsgefahr mit dem Bewegungselement besteht.

Der zweite Überwachungsbereich, welcher dem Öffnungssensor zugeordnet ist, ist regelmäßig weiter beabstandet von der Tür, da eine sich der Tür nähernde Person frühzeitig erkannt werden muss, damit die Tür rechtzeitig geöffnet werden kann. Verlässt beispielsweise eine Person den zweiten Überwachungsbereich, da sie sich mittlerweile im ersten Überwachungsbereich befindet, so genügt es beispielsweise, wenn der Öffnungssensor die Tür für eine ausreichende Zeit offen hält; bleibt nämlich die Person beispielsweise im Bewegungsbereich der Tür stehen, so sorgt der Sicherheitssensor dafür, dass keine Kollision mit der Tür erfolgt, da er die Überwachung im ersten Überwachungsbereich übernommen hat. In diesem Fall genügt es, wenn der Öffnungssensor das Öffnen der Tür initiiert und eine ausreichende Möglichkeit schafft, dass die Person durch die Öffnung der Tür hindurch treten kann. Bei einer besonderen Ausgestaltung kann ein Sensor so ausgebildet sein, dass dieser die Funktion von Öffnungs- und Sicherheitssensor übernimmt. Beispielsweise kann der Sender so ausgebildet sein, dass ein Teil der ausgesandten Strahlung lediglich in den ersten Überwachungsbereich läuft und ein weiterer Teil lediglich in den zweiten Überwachungsbereich. In der Regel ist es zu vermeiden, dass eine Überlappung von erstem und zweitem Überwachungsbereich erfolgt, da es gegebenenfalls zu Fehlfunktionen kommen kann, wenn sich ein Objekt in dem Überlappbereich zwischen erstem und zweitem Überwachungsbereich befindet. Im Fall eines Entfernungsensors können die beiden Überwachungsgebiete durch eine bestimmte Distanz oder eine bestimmte Grenzfläche abgegrenzt sein, sodass detektierte Objekte aufgund ihrer Distanzen den beiden Überwachungsgebieten eindeutig zugeordnet werden können.

Insbesondere ist bei einer Ausführungsform der Erfindung denkbar, dass der Öffnungssensor separat ausgebildet ist und die Funktion einer Winkelmessvorrichtung besitzt, sodass die somit bestimmte aktuelle Winkelposition des Bewegungselementes an die Auswerteeinheit übermittelt wird und dazu dient, dass der Öffnungssensor nicht versehentlich das Bewegungselement selbst für eine sich nähernde Person hält und beispielsweise beim Schließvorgang der Tür erneut versucht, die Tür zu öffnen.

Der Sender kann bei einer Weiterbildung der Erfindung so ausgebildet sein, dass dieser in einen breiten Raumwinkelbereich abstrahlt. Beispielsweise kann diese mittels einer entsprechenden Linse, beispielsweise einer Art Fischauge ermöglicht werden. Denkbar ist grundsätzlich auch, dass der Sender lediglich in diskrete Bereiche eines Raumwinkels abstrahlt. Regelmäßig ist jedoch in diesem Fall notwendig, dass entweder mehrere abstrahlende Sender vorhanden sind bzw. mehrere Lichtquellen oder dass beispielsweise eine Lochmaske für die diskreten Bereiche sorgt. In der Regel ist es jedoch kostengünstiger, eine entsprechende Linse vorzusehen, die eine entsprechend breitwinklige Abstrahlung ermöglicht. Zudem bietet diese Maßnahme den Vorteil, dass in einen entsprechend weiten Bereich ohne einzelne Lücke dazwischen das ausgestrahlte Licht gelangen kann.

Beim Empfänger ist es jedoch regelmäßig vorteilhaft, dass dieser lediglich einzelne Raumwinkelbereiche erfasst. Dies kann beispielsweise dadurch erfolgen, dass einzelne Teilempfänger vorgesehen sind, die zusammen den Empfänger bilden, welche jedoch in verschiedene Richtungen weisen, sodass sie entsprechend verschiedene Teilraumwinkel erfassen können. Allein durch diese Ausgestaltung wird ermöglicht, dass jedem Empfänger ein speziell definierter Raumwinkelbereich zugeordnet werden kann, wodurch bereits die Winkelposition bzw. Position im Raum kodiert werden kann.

Zudem ist eine erfindungsgemäße Schwenktür so ausgebildet, dass sie einen Türrahmen umfasst, und ein um eine Drehachse verschwenkbares Bewegungselement, das am seitlichen Türrahmen über ein Türband drehbar befestigt ist, wobei das Bewegungselement zwischen einem geöffneten und einem geschlossenen Zustand einer Öffnung der Schwenktür verschwenkbar ist. Der Türrahmen kann auch durch die Wand gebildet sein. Die Öffnung besteht in der Regel darin, dass die Schwenktür einen Durchgang durch eine Wand oder ein Wandelement zu einem anderen Raum ermöglicht. Das Bewegungselement verschließt diese Öffnung wobei bei Öffnung des Bewegungselementes der Zugang durch die Öffnung ermöglicht wird. In vorteilhafterweise kann eine Überwachungsvorrichtung gemäß der Erfindung für die Überwachung der Bewegung bei der Schwenktür genutzt werden.

Bei einer besonders vorteilhaften Weiterbildung der Erfindung ist der Sensor ortsfest, insbesondere auf dem seitlichen Türrahmen und/oder auf der Drehachse und/oder weniger als 50 cm oder weniger als 20 cm über dem Boden, insbesondere unmittelbar an ein unteres Türband angrenzend angeordnet. Insbesondere kann eine bodenparallele Detektion erfolgen. Somit wird der Boden selbst nicht erfasst. Besonders vorteilhaft ist es jedoch, eine bodennahe Detektion durchzuführen, zumal ein Kontakt einer Person oder eines Objektes unabhängig von dessen Größe regelmäßig mit dem Boden stattfindet.

Besonders vorteilhaft ist bei der Erfindung die stationäre Anbringung, welche öffnungsseitig und bandseitig erfolgt. Eine öffnungsseitige Anordnung bedeutet, dass der Sensor auf der Seite der Tür angeordnet ist, auf der die Schwenkbewegung des Bewegungselements erfolgt. Eine bandseitige Befestigung bedeutet, dass die Befestigung dort erfolgt, wo sich die Drehachse des Bewegungselementes befindet. Der Überwachungssensor sitzt gewissermaßen im Ursprung bzw. in der Nähe des Ursprungs des Winkelbereichs, um den die Schwenkbewegung der Tür erfolgt. Dies ermöglicht in besonders einfacher Weise, dass ein Winkelbereich ausgeblendet wird (englisch: blanking).

Die Anbringung des Sensors mit bodenparalleler und bodennaher Detektion kann in gewisser Weise mit den Vorteilen einer Trittkontaktmatte verglichen werden, die ebenfalls ausnutzt, dass eine Person im Bodenbereich einen Kontakt auslöst wenn sie den Türöffnungsbereich betritt. Das Ausblenden kann in einfacher Weise dadurch erfolgen, dass die Türblattwinkelstellung detektiert wird und genau diese ausgeblendet werden kann. Die Winkelmessvorrichtung bzw. der Winkelsensor kann sich grundsätzlich im gleichen Gehäuse wie der Sicherheitssensor befinden, beispielsweise dann, wenn der Sensor identisch mit dem Winkelgeber ist, aber auch dann, wenn beispielsweise ein zusätzlicher Sensor als Winkelgeber vorhanden ist, etwa ein mechanischer oder ein optischer Sensor. Eine bauliche Einheit mit dem Sicherheitssensor kann dementsprechend gewährleistet sein.

Denkbar ist aber auch, dass ein 3-D-Türöffnungssensor gesondert vorgesehen ist, welcher unten oder öffnungsseitig am oberen waagrechten Türrahmen, dem so genannten Türsturz, bzw. öffnungsseitig an der Wand über der Türöffnung bzw. am Türsturz angeordnet ist. Diese Anordnung besitzt den Vorteil, dass in einfacher Weise eine Ausrichtung in den zweiten Überwachungsbereich, der weiter von der Tür beabstandet ist, ermöglicht wird. Denkbar ist aber darüber hinaus, dass Sicherheitssensor und Öffnungssensor in einer Baueinheit integriert sind, auch dann, wenn die Überwachungsvorrichtung im seitlichen Bereich näher der Drehachse befestigt ist. Der Öffnungssensor kann dann so ausgerichtet sein, dass dessen Strahlen in einem Winkelbereich Nähe 90° zur geschlossenen Tür ausgerichtet sind, also in einen weiter von der Tür beabstandeten Bereich ragen.

Insbesondere kann der Öffnungssensor, der in die Überwachungsvorrichtung gegebenenfalls zusammen mit der Sicherheitsvorrichtung integriert ist, auch so ausgerichtet sein, dass dessen Überwachungsbereich außerhalb des Bewegungsbereiches bzw. des ersten Überwachungsbereiches liegt. Wird die Tür selbst oder eine Markierungseinheit an der Tür erfasst, so bietet sich in der Regel die Türkante bzw. das seitliche Türband als Referenzstelle an. Als Distanzsensor kann insbesondere ein 3-D- Distanzsensor, z. B. ein 8 x 8 ToF-Sensor verwendet werden. Bei einer bandseitigen Anordnung des Sicherheitssensors kann dieser so angeordnet sein, dass er dann, wenn die Tür nicht vollständig geöffnet bzw. geschlossen ist sowohl den Bereich vor als auch hinter der Tür erfasst, wobei der Bereich, indem sich die Tür selbst befindet, ausgeblendet wird. Des Weiteren kann in vorteilhafterweise, gerade dann, wenn Öffnungs- und Sicherheitssensor in eine Einrichtung integriert sind, Beleuchtungsmittel eingespart werden, aber auch gegebenenfalls Rechnerleistung, weil das Ausblenden in besonders einfacher Weise erfolgen kann und keine weitere Bildverarbeitung notwendig ist.

Bei einer bevorzugten Weiterbildung der Erfindung werden die Bereiche vor und hinter dem Bewegungselement (d.h. öffnungsseitig und auf der der Öffnung abgewandten Seite) überwacht, und zwar von zwei separaten Sicherheitssensoren.

Ist die Tür geöffnet, kann es zum Beispiel vorkommen, dass eine Person oder ein Gegenstand, der / die sich zwischen dem Bewegungselement und der Tür befindet, gegebenenfalls nicht vom seitlich am Türrahmen angebrachten Sicherheitssensor und auch nicht vom Öffnungssensor über der Tür erfasst werden kann. Daher kann vorteilhafterweise ein Sicherheitssensor im oberen Bereich des Türrahmen (bzw. auch über der Tür) angebracht sein, der diesen Bereich überwacht. Ferner kann eine Kommunikation zu diesem Sensor im oberen Bereich des Türrahmen vorgesehen sein, sodass zum Beispiel der Sensor im oberen Bereich des Türrahmen die Information erhält, in welcher aktuellen Winkelposition sich das Bewegungselement befindet und welcher Raumwinkelbereich deshalb momentan zu überwachen ist.

### Ausführungsbeispiel

Ein Ausführungsbeispiel der Erfindung ist in den Zeichnungen dargestellt und wird nachstehend unter Angabe weiterer Einzelheiten und Vorteile erläutert.

Im Einzelnen zeigen
- Figur 1: eine Überwachungsvorrichtung mit einer Überwachung in einem Raum,
- Figur 2: eine Überwachungsvorrichtung gemäß der Erfindung mit einer Überwachung in einer horizontalen und vertikalen Ebene,
- Figur 3: eine Überwachungsvorrichtung mit einer Überwachung in einer horizontalen Ebene,
- Figur 4: eine schematische Detailansicht einer Überwachungsvorrichtung,
- Figur 5: eine schematische Draufsicht auf eine Überwachungsvorrichtung mit einer Schwenktür,
- Figur 6: eine schematische Darstellung einer Überwachungsvorrichtung mit einem als Sicherheitssensor und öffnungssensor ausgebildeten Sensor,
- Figur 7: eine schematische Darstellung der Überwachungsvorrichtung mit einem separaten optischen Winkelgeber,
- Figur 8: eine schematische Darstellung der Überwachungsvorrichtung mit einem separaten mechanischen Winkelgeber, sowie
- Figur 9: eine schematische Darstellung einer Überwachungsvorrichtung mit zwei Sicherheitssensoren.

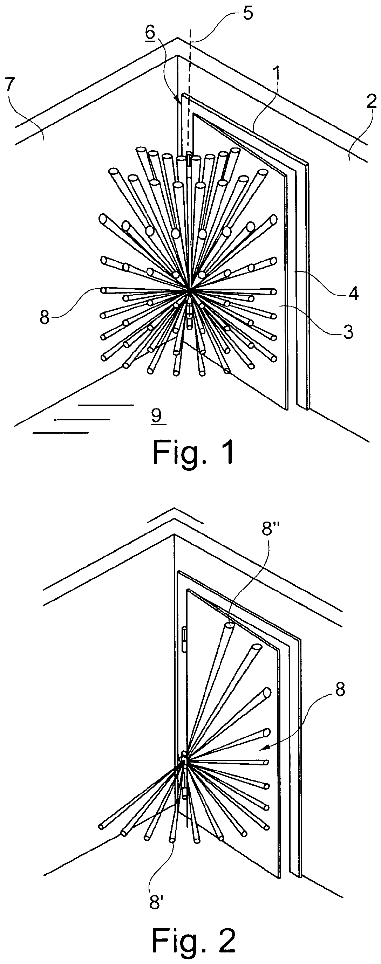

Figur 1 zeigt eine Schwenktür 1, die in einer Wand 2 angeordnet ist, mit einem Bewegungselement 3, das in geschlossenem Zustand eine Öffnung 4 versperrt und in geöffnetem Zustand den Durchgang durch die Öffnung 4 ermöglicht. Wandseitig ist im Bereich der Drehachse 5 am Türrahmen 6 ein Überwachungssensor angeordnet. Dieser Überwachungssensor ist so angeordnet, dass er praktisch im Ursprung des Winkelbereichs liegt, den die Tür 3 beim Verschwenken überstreicht. Der Überwachungssensor selbst ist in Figur 1 nicht dargestellt. Er besitzt einen Sender, der in einen breiten Raumbereich Licht abstrahlt. Der Empfänger des Überwachungssensors ist wiederum so ausgebildet, dass dieser lediglich diskrete Raumwinkel erfasst. Der gesamte Raumwinkel, der vom Empfänger erfasst wird bzw. der von Teilraumwinkeln durchsetzt wird, die wiederum vom Empfänger erfasst werden, ist bodenseitig so ausgebildet, dass dieser horizontal über dem Boden verläuft und in vertikaler Richtung einzelne Ebenen umfasst, die zwischen der Schwenktür und der 90° zur Wand 2 verlaufenden Wand 7 liegt. Diese Teilraumwinkel sind mit dem Bezugszeichen 8 dargestellt. Im bodenseitigen Bereich (Boden 9) verlaufen die Teilstrahlenbündel 8 parallel zur Ebene des Bodens 9.

Wird das Bewegungselement 3 um die Drehachse 5 verschwenkt, d. h. geöffnet, so passiert sie einzelne Teilraumwinkel 8. Aufgrund einer Markierungseinheit (hier nicht weiter dargestellt an der Tür) empfängt die Überwachungseinheit Signale, die dem Bewegungselement zugeordnet werden können. Eine solche Markierungseinheit ist im vorliegenden Fall ein diffuser Streuer, sodass die Tür bzw. das Bewegungselement 3 eindeutig identifiziert werden kann. Mit größer werdender Schwenkbewegung der Tür 3 werden nacheinander die entsprechenden Teilraumwinkelbereiche vom Bewegungselement passiert. Der entsprechende Winkelbereich, welcher dem Bewegungselement 3 zugeordnet werden kann, also die aktuelle Winkelposition der Tür 3, kann dann durch die Auswerteeinheit ausgeblendet werden, d. h. dieser Bereich steht nicht mehr zur Verfügung, wenn ein Objekt identifiziert werden soll.

Figur 2 zeigt eine ähnliche Überwachungsvorrichtung, wobei im vorliegenden Fall jedoch lediglich Teilraumwinkel erfasst werden, welche horizontal verlaufen, d. h. parallel zum Boden 9 sowie ein vertikaler Ebenenbereich mit Teilraumwinkeln, die im Wesentlichen parallel zum Bewegungselement ausgerichtet sind. Die Teilraumwinkel, die in horizontaler Richtung ausgerichtet sind, werden mit dem Bezugszeichen 8' bezeichnet. Diese sind ausreichend, um den aktuellen Winkelbereich der Tür zu erfassen, da ein Teilraumwinkelbereich nach dem anderen von der Tür passiert wird. Ein Teil der Empfänger wird so weitergeschaltet, dass die Teilraumwinkelbereiche 8" in einem Bereich erfasst werden, der unmittelbar vor der Tür liegt, sodass beim Öffnen der Tür der entsprechende Bereich erfassbar ist. Denkbar ist darüber hinaus, dass aus Sicht der Figuren 1 bzw. 2 ein Bereich hinter der Tür erfasst wird, falls der entsprechende Sensor entsprechend angeordnet ist.

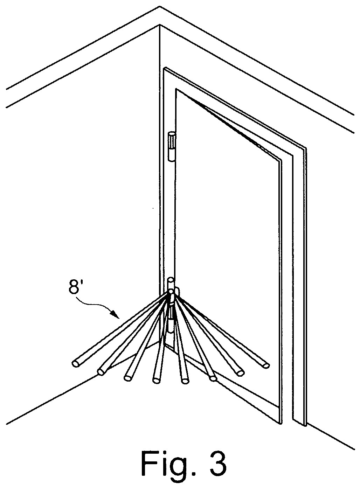

Figur 3 wiederum zeigt eine Überwachungsvorrichtung, bei der lediglich der bodenseitige Bereich abgetastet wird durch einzelne Teilraumwinkelbereiche 8'. Eine derartige Anordnung kann im Grunde ausreichend sein, da eine sich nähernde Person sich im Wesentlichen bodennah aufhält. Denkbar ist, dass diese horizontale Ebene, welche die Teilraumwinkelbereiche 8' umfasst, in einer Höhe zwischen 0 cm und 70 cm (cm: Zentimeter) über dem Boden angebracht ist, insbesondere < 60 cm, < 50 cm, < 40 cm, < 30 cm, < 20 cm sowie < 10 cm. Im Übrigen beträgt der Erfassungsbereich, der bei einem ToF-Sensor beispielsweise vom Empfänger erfasst wird, ein Bereich, der maximal ca. 7,5 m (m: Meter) vom Empfänger entfernt ist.

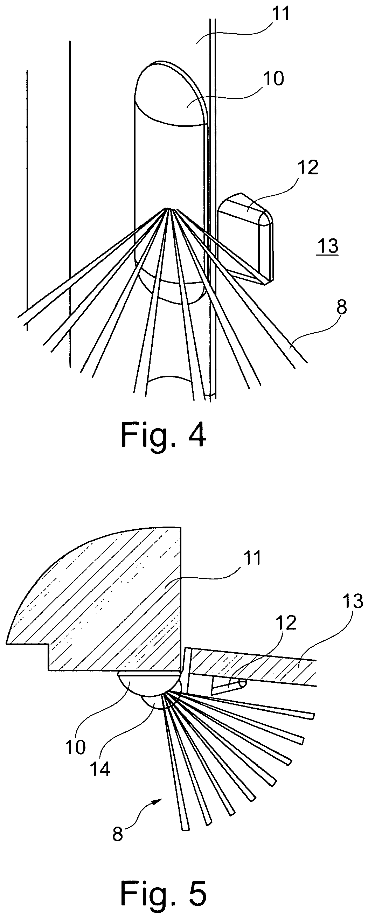

Figur 4 zeigt die Überwachungsvorrichtung 10, welche im seitlichen Bereich am Türrahmen 11 angebracht ist. Des Weiteren ist eine Markierungseinheit 12 an einer Tür 13 vorgesehen. Die Markierungseinheit 12 ist ein Gegenstand mit einer diffus streuenden Oberfläche. Bei diesem Beispiel ist die Überwachungsvorrichtung als Sicherheitsvorrichtung ausgebildet, wobei der Empfänger des Sensors in horizontaler Richtung Teilraumwinkel 8 erfasst. Das ausgestrahlte Licht, welches der Sensor ausstrahlt, ist nicht weiter dargestellt in der Figur. Gelangt der diffuse Streuer 12 in den Bereich, der von einem Empfänger erfasst wird, so wird er entsprechend detektiert und die Winkelposition der Tür 13 wird entsprechend erfasst und von der Auswerteeinheit berücksichtigt. Das bedeutet, dass ein Objekt nur dann erkannt wird, wenn es nicht dieser bestimmten Winkelposition, die der Schwenktür zugeordnet ist, entspricht. Im vorliegenden Fall ist gewissermaßen der Winkelgeber in den Sicherheitssensor mit integriert. Ein Objekt, das sich beispielsweise neben der Tür befindet, also nicht der Winkelposition des Bewegungselementes zuordenbar ist, wird als solches Objekt wahrgenommen, das beispielsweise eine Kollision mit dem Bewegungselement 13 hervorrufen könnte, sodass anschließend die Bewegung des Bewegungselementes blockiert werden kann.

Figur 5 zeigt die Überwachungsvorrichtung mit Türrahmen und Tür in Draufsicht. Zu sehen ist der Türrahmen 11, an dem die Überwachungsvorrichtung 10 befestigt ist, wobei die Tür 13 über ein Scharnier bzw. Türband 14 drehbar am Türrahmen befestigt ist. An der Tür wiederum ist eine diffus streuende Markierungseinheit 12 angebracht. Die Überwachungsvorrichtung 10 überwacht einen Raumwinkel, der von Teilraumwinkeln 8 durchsetzt ist, die wiederum vom Empfänger des Sensors 10 wahrgenommen werden. Gelangt vom Sender des Sensors ausgestrahltes Licht auf die Markierungseinheit 12, so wird es diffus gestreut und die Markierungseinheit 12 wahrgenommen. Der entsprechende Winkelbereich, welcher dann dem Bewegungselement 13 zugeordnet werden kann, wird von der Auswerteeinheit, die in die Überwachungseinheit 10 integriert ist, ausgeblendet.

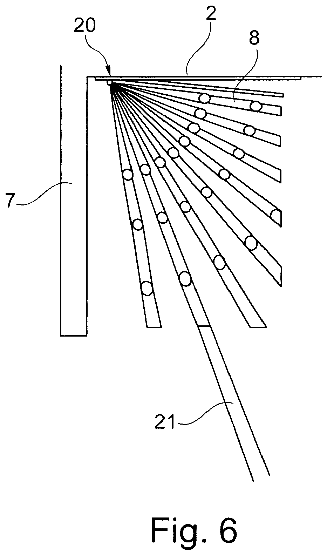

Figur 6 zeigt die Ecke zwischen zwei Wänden 2 und 7 sowie einen Überwachungssensor 20, welcher Teilraumbereiche 8 überwacht. Es handelt sich bei Überwachungsvorrichtung 20 allerdings nicht nur eine Sicherheitsvorrichtung, sondern auch um einen Öffnungssensor, welcher einen weiter entfernten zweiten Überwachungsbereich überwacht. Dieser wird dargestellt durch einen Empfänger, der auf einen weiter entfernten Bereich über den Teilraumbereich 21 ausgerichtet ist. Somit kann mit einer einzigen Überwachungsvorrichtung sowohl eine Sicherheitsüberwachung als auch eine Öffnungsüberwachung erfolgen.

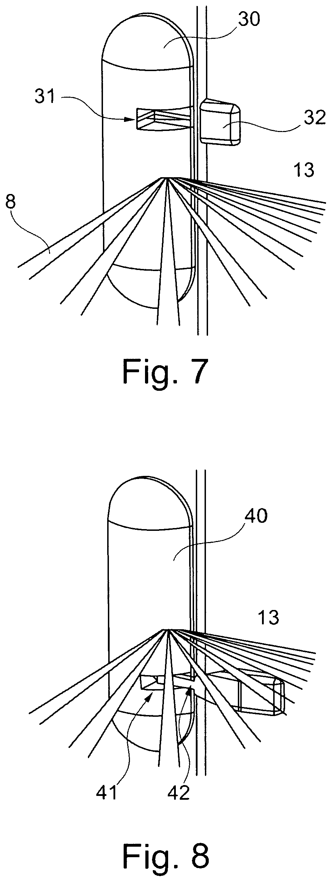

Figur 7 umfasst eine an einem Türrahmen angebrachte Überwachungsvorrichtung 30, welche wiederum in horizontaler Richtung über die Teilraumbereiche 8 einen Bereich mittels einer Sicherheitsvorrichtung überwacht. Zusätzlich ist allerdings noch ein Winkelgeber 31 integriert, der als optischer Winkelgeber ausgebildet ist. Dieser umfasst eine Leuchtdiode, die ein Spotlicht auswirkt, das auf eine Markierungseinheit 32 am Bewegungselement fällt. Diese Markierungseinheit 32 am Bewegungselement besitzt eine reflektierende Oberfläche, sodass der entsprechende Lichtstrahl wieder zurückgeworfen wird und schließlich auf einem Zeilensensor des Sensors 31 auftrifft. Beim Verschwenken der Tür 13 bewegt sich der reflektierte Strahl entlang der Zeile des Zeilensensors, sodass durch die Position eine Winkelposition des Bewegungselementes bestimmt werden kann. Die Auswerteeinheit ist mit dem Sensor 31 verbunden und kann die aktuelle Winkelposition des Bewegungselementes 13 entsprechend ausblenden.

Figur 8 zeigt eine ähnliche Überwachungsvorrichtung, wie die Überwachungsvorrichtung 31 aus Figur 7. Die nunmehr dargestellte Überwachungsvorrichtung 40 überwacht in einer Sicherheitsvorrichtung ebenfalls Teilraumbereiche 8 in horizontaler Ebene. Zudem besitzt sie allerdings einen mechanischen Winkelgeber 41. Im vorliegenden Fall ist der Hebel 42 drehbar sensorseitig gelagert und weist türseitig eine Kulissenführung auf. Der Sensor 41 misst dementsprechend die Verdrehung innerhalb der Lagerung, um die aktuelle Winkelposition des Bewegungselementes 13 zu ermitteln. Denkbar ist aber auch, dass die Lagerung umgekehrt angeordnet ist und sensorseitig eine Kulissenführung vorgesehen wird. Dementsprechend wird auch in dieser Ausführungsform, analog zu der in Figur 7, die aktuelle Winkelposition ausgeblendet (englisch: blanking).

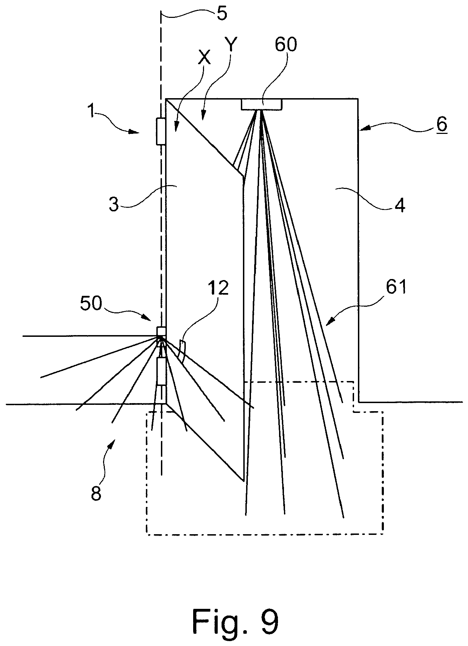

Figur 9 zeigt eine Schwenktür 1 mit einem Türrahmen 6 und einem Bewegungselement 3, das drehbar um eine Achse 5 gelagert und motorisch angetrieben ist. Die Öffnung 4 wird durch das Bewegungslement 3 geöffnet bzw. verschlossen. Die von der Öffnung abgewandte Seite X wird vom Sicherheitssensor 50 der Überwachungsvorrichtung überwacht (horizontal verlaufender Bereich 8), während der öffnungsseitige Bereich Y von dem Sicherheitssensor Y überwacht wird (Raumwinkel 61). Die aktuelle Winkelposition der Tür wird dem Sensor 60 mitgeteilt, sodass dieser den zu überwachenden Raumwinkel 61 anpassen kann.

### Bezugszeichenliste:

- 1: Schwenktür
- 2: Wand
- 3: Bewegungselement
- 4: Öffnung
- 5: Drehachse
- 6: Türrahmen
- 7: Wand
- 8: Teilraumbereich
- 9: Boden
- 8': horizontaler Teilraumbereich
- 8": vertikaler Teilraumbereich
- 10: Überwachungsvorrichtung
- 11: Türrahmen
- 12: Markierungseinheit
- 13: Bewegungselement
- 14: Türband
- 20: Überwachungsvorrichtung
- 21: Teilbereich des 2. Überwachungsbereichs
- 30: Überwachungsvorrichtung
- 31: optischer Winkelgeber
- 32: Reflexionseinheit
- 40: Überwachungsvorrichtung
- 41: mechanischer Winkelgeber
- 42: Hebel
- 50: erster Sicherheitssensor
- 60: zweiter Sicherheitssensor
- 61: überwachter Raumwinkel
- X: von Öffnung abgewandter Bereich
- Y: öffnungsseitiger Bereich

## Patentansprüche

1. Überwachungsvorrichtung (10, 20, 30, 40) zur Überwachung der Bewegung eines um eine Drehachse (5) verschwenkbar gelagerten und mittels eines Antriebs angetriebenen Bewegungselementes (3, 13), wobei das Bewegungselement zwischen einem geöffneten und einem geschlossenen Zustand einer zu verschließenden Öffnung verschwenkbar ist, insbesondere einer mittels eines Türbands drehbar um eine Drehachse gelagerten und mittels eines Motors um die Drehachse bewegbaren Schwenktür, wobei die Überwachungsvorrichtung einen Sensor (50) zur Erfassung eines Objektes und zur Überwachung eines Raumwinkels (8, 8', 8"), dessen Ursprung im Bereich der Drehachse liegt, aufweist, wobei der Sensor einen Sender und einen Empfänger zum Aussenden und Empfangen elektromagnetischer Detektionsstrahlung innerhalb des Raumwinkels umfasst und wobei der Sensor dazu ausgebildet ist, Detektionssignale, welche der Empfänger bei der Detektion elektromagnetischer Strahlung erzeugt, auszugeben, wobei die Überwachungsvorrichtung eine Auswerteeinheit zur Auswertung der Detektionssignale in Abhängigkeit von deren Position im Raumwinkel umfasst, wobei die Auswerteeinheit dazu ausgebildet ist, in Abhängigkeit von der aktuellen Winkelposition des Bewegungselements zwischen dem Bewegungselement und einem Objekt zu unterscheiden, indem der Winkelbereich, der dem Bewegungselement in seiner aktuellen Winkelposition zugeordnet ist, ausgeblendet wird, sodass der dem Bewegungselement zugeordnete Winkelbereich entweder bei der Auswertung der Detektionssignale nicht berücksichtigt wird oder die Auswerteeinheit annimmt, dass eine Detektion im dem Bewegungselement zugeordneten Winkelbereich nicht von einem Objekt, sondern vom Bewegungselement stammt, wobei der Sensor im Bereich der Drehachse montiert ist und die Auswerteeinheit zur Auswertung der Detektionssignale in Abhängigkeit von der Winkelposition der detektierten Strahlung im Raumwinkel und zur Bestimmung, ob ein Objekt erfasst wurde und/oder welche Position das erfasste Objekt besitzt, ausgebildet ist, **dadurch gekennzeichnet, dass** eine Winkelmessvorrichtung zur Messung der Winkelposition des Bewegungselementes vorhanden ist und dass die Winkelmessvorrichtung einen Hebel umfasst, der an das Bewegungselement mechanisch gekoppelt ist und dazu ausgebildet ist, mittels der Verschiebung des Hebels bei Bewegung des Bewegungselementes die Winkelposition des Bewegungselementes zu erfassen.

2. Überwachungsvorrichtung nach Anspruch 1, **dadurch gekennzeichnet, dass** der Sensor zur Erfassung des Objektes und zur Überwachung des Raumwinkels als Entfernungssensor zur Bestimmung des Entfernung eines Objektes ausgebildet ist, insbesondere als Time-of-flight-Sensor (ToF-Sensor).

3. Überwachungsvorrichtung nach einem der vorgenannten Ansprüche, **dadurch gekennzeichnet, dass** eine Übertragungsvorrichtung vorhanden ist, die dazu ausgebildet ist, mit einer Kontrollvorrichtung zur Kontrolle des Antriebs des Bewegungselementes und/oder mit dem Antrieb verbunden zu werden und Datensignale mit Informationen über die aktuelle Winkelposition des Bewegungselementes und von der Kontrollvorrichtung und/oder dem Antrieb an die Auswerteeinheit zu übermitteln, insbesondere zu empfangen oder zu senden

4. Überwachungsvorrichtung nach einem der vorgenannten Ansprüche, **dadurch gekennzeichnet, dass** der Sensor als Sicherheitssensor zum Stoppen der Bewegung des Bewegungselements zur Vermeidung ungewollter Kollisionen mit dem Objekt, wobei der Sicherheitssensor dazu ausgebildet ist, ein erstes Überwachungsgebiet zu überwachen und die Bewegung bei Detektion des Objektes innerhalb des ersten Überwachungsgebiets zu stoppen, und/oder als Öffnungssensor zum Öffnen des Bewegungselements bei Annäherung des Objektes ausgebildet ist, wobei der Öffnungssensor dazu ausgebildet ist, ein zweites Überwachungsgebiet zu überwachen und bei Detektion des Objektes innerhalb des zweiten Überwachungsgebiets das Bewegungselement mittels des Antriebs in den geöffneten Zustand überzuführen.

5. Überwachungsvorrichtung nach einem der vorgenannten Ansprüche, **dadurch gekennzeichnet, dass** der Sender des Sensors zur Erfassung des Objektes und zur Überwachung des Raumwinkels dazu ausgebildet ist, wenigstens den gesamten, zu überwachenden Raumwinkel mit Detektionsstrahlen auszustrahlen.

6. Überwachungsvorrichtung nach einem der vorgenannten Ansprüche, **dadurch gekennzeichnet, dass** der Empfänger des Sensors zur Erfassung des Objektes und zur Überwachung des Raumwinkels wenigstens zwei Teilempfänger umfasst, um elektromagnetische Strahlung jeweils aus einem begrenzten Teilbereich des zu überwachenden Raumwinkels zu detektieren.

7. Überwachungsvorrichtung nach einem der vorgenannten Ansprüche, **dadurch gekennzeichnet, dass** die Überwachungsvorrichtung wenigstens zwei Sensoren zur Erfassung eines Objektes und zur Überwachung eines Raumwinkels umfasst, wobei einer der wenigstens zwei Sensoren dazu ausgebildet und/oder derart ausgerichtet ist, einen öffnungsseitigen Raumwinkelbereich auf der einen Seite des Bewegungselements und ein anderer der wenigstens zwei Sensoren dazu ausgebildet und/oder derart ausgerichtet ist, den von der Öffnung abgewandten Raumwinkelbereich auf der anderen Seite des Bewegungselements zu überwachen.

8. Überwachungsvorrichtung nach einem der vorgenannten Ansprüche, **dadurch gekennzeichnet, dass** eine Übermittlungsvorrichtung zur Übermittlung von Informationen und/oder Befehlen vom Sensor zur Überwachung des öffnungsseitigen Raumwinkels zum Sensor zur Überwachung des von der Öffnung abgewandten Raumwinkels und/oder umgekehrt vorgesehen ist.

9. Schwenktür (1) mit einem Türrahmen und einem um eine Drehachse verschwenkbaren Bewegungselement, das an dem Türrahmen über ein Türband drehbar befestigt ist, wobei das Bewegungselement zwischen einem geöffneten und einem geschlossenen Zustand einer Öffnung der Schwenktür verschwenkbar ist, **dadurch gekennzeichnet, dass** eine Überwachungsvorrichtung nach einem der vorgenannten Ansprüche vorhanden ist.

10. Schwenktür nach Anspruch 9, **dadurch gekennzeichnet,**
**dass** der Sensor ortsfest, insbesondere auf dem seitlichen Türzsturz und/oder auf der Drehachse und/oder weniger als 50 cm (Zentimeter) über dem Boden, insbesondere unmittelbar an ein unteres Türband angrenzend, angeordnet ist.

11. Schwenktür nach Anspruch 9, **dadurch gekennzeichnet, dass** der Sensor zur Überwachung des öffnungsseitigen Raumwinkels auf dem seitlichen Türrahmen und der Sensor zur Überwachung des von der Öffnung abgewandten Raumwinkels im oberen Bereich des Türrahmens angebracht ist.

## Claims

1. A monitoring device (10, 20,30, 40) for monitoring the movement of a movement element (3, 13) pivotably mounted about an axis of rotation (5) and driven by means of a drive, wherein the movement element is pivotable between an open and a closed state of an opening to be closed, in particular a hinged door mounted rotatably about an axis of rotation by means of a door hinge and movable about the axis of rotation by means of a motor, wherein the monitoring device has a sensor (50) for the detection of an object and for monitoring a spatial angle (8, 8', 8"), the origin of which is in the area of the axis of rotation, wherein the sensor comprises a transmitter and a receiver for transmitting and receiving electromagnetic detection radiation within the spatial angle and wherein the sensor is designed to emit detection signals, which the receiver generates in the detection of electromagnetic radiation, wherein the monitoring device comprises an evaluation unit for the evaluation of detection signals depending on their position in the spatial angle, wherein the evaluation unit is designed to differentiate between the movement element and an object depending on the current angular position of the movement element, while the angle range, which is assigned to the movement element in its current angular position is hidden, so that the angular range assigned to the movement element either is not taken into consideration in the evaluation of the detection signals or the evaluation unit assumes, that a detection in the angular range assigned to the movement element does not originate from an object, but rather from the movement element, wherein the sensor is mounted in the area of the axis of rotation and the evaluation unit for the evaluation of the detection signals is designed depending on the angular position of the detected radiation in the spatial angle and for determining whether an object was detected and/or which position the detected object has, **characterized in that** an angle measurement device for measuring the angular position of the movement element is present and that the angle measurement device comprises a lever, which is mechanically coupled to the movement element and is designed to detect the angular position of the movement element by means of the moving of the lever with movement of the movement element.

2. A monitoring device according to Claim 1, **characterized in that** the sensor for detection of the object and for monitoring the spatial angle is designed as a distance sensor for determining the distance of an object, in particular as a time-of-flight-sensor (ToF-sensor).

3. A monitoring device according to one of the aforementioned claims, **characterized in that** a transmission device is present, which is designed to be connected with a control device for the control of the drive of the movement element and/or with the drive and to transmit, in particular to receive and to send, data signals with information on the current angular position of the movement element and of the control device and/or the drive to the evaluation unit.

4. A monitoring device according to one of the aforementioned claims, **characterized in that** the sensor is designed as a safety sensor for stopping the movement of the movement element to prevent undesired collisions with the object, wherein the safety sensor is designed to monitor a first monitoring area and to stop the movement upon detection of the object within the first monitoring area, and/or as an opening sensor for opening the movement element upon the approach of the object, wherein the opening sensor is designed to monitor a second monitoring area and upon detection of the object within the second monitoring area to transfer the movement element by means of the drive into the opened state.

5. A monitoring device according to one of the aforementioned claims, **characterized in that** the transmitter of the sensor for the detection of the object and for the monitoring of the spatial angle is designed to radiate at least the entire spatial angle to be monitored with detection beams.

6. A monitoring device according to one of the aforementioned claims, **characterized in that** the receiver of the sensor for the detection of the object and for the monitoring of the spatial angle comprises at least two sub-receivers, in order to detect electromagnetic radiation in each case from a limited sub-area of the spatial angle to be monitored.

7. A monitoring device according to one of the aforementioned claims, **characterized in that** the monitoring device comprises at least two sensors for the detection of an object and for the monitoring of a spatial angle, wherein one of the at least two sensors is designed and/or oriented so as to monitor an opening-side spatial angular range on the one side of the movement element and another of the at least two sensors is designed and/or oriented so as to monitor the spatial angular range facing away from the opening on the other side of the movement element.

8. A monitoring device according to one of the aforementioned claims, **characterized in that** a transmission device for the transmission of information and/or commands from the sensor for the monitoring of the opening-side spatial angle is provided for the monitoring of the spatial angle facing away from the opening and/or vice versa.

9. A hinged door (1) with a door frame and a movement element pivotable about an axis of rotation, which movement element is rotatably mounted on the door frame by means of a door hinge, wherein the movement element is pivotable between an opened and a closed state of an opening of the hinged door, **characterized in that** a monitoring device is present according to one of the aforementioned claims.

10. A hinged door according to Claim 9, **characterized in that** the sensor is arranged in a stationary manner, in particular on the door lintel and/or on the axis of rotation and/or less than 50 cm (centimeters) above the floor, in particular, immediately bordering on a lower door hinge.

11. A hinged door according to Claim 9, **characterized in that** the sensor for the monitoring of the opening-side spatial angle is attached to the side door frame and the sensor for the monitoring of the spatial angle facing away from the opening is attached in the upper area of the door frame.

## Revendications

1. Dispositif de surveillance (10, 20, 30, 40) pour la surveillance du mouvement d'un élément de mouvement (3, 13) logé de manière pivotante autour d'un axe de rotation (5) et entraîné au moyen d'un dispositif d'entraînement, l'élément de mouvement étant pivotant entre un état ouvert et un état fermé d'une ouverture à fermer, plus particulièrement d'une porte pivotante logée de manière rotative, au moyen d'une charnière, autour d'un axe de rotation et mobile au moyen d'un moteur autour de l'axe de rotation, le dispositif de surveillance comprenant un capteur (50) pour la mesure d'un objet et pour la surveillance d'un angle spatial (8, 8', 8"), dont l'origine se trouve au niveau de l'axe de rotation, le capteur comprenant un émetteur et un récepteur pour l'émission et la réception d'un rayonnement de détection électromagnétique à l'intérieur de l'angle spatial et le capteur étant conçu pour émettre des signaux de détection que génère le récepteur lors de la détection d'un rayonnement électromagnétique, le dispositif de surveillance comprenant une unité d'analyse pour l'analyse des signaux de détection en fonction de leur position dans l'angle spatial, l'unité d'analyse étant conçue pour différencier, en fonction de la position angulaire actuelle de l'élément de mouvement, entre l'élément de mouvement et un objet, grâce au fait que la zone angulaire, qui correspond à l'élément de mouvement dans sa position angulaire actuelle, est masquée, de façon à ce que la zone angulaire correspondant à l'élément de mouvement ne soit pas prise en compte lors de l'analyse des signaux de détection ou l'unité d'analyse suppose qu'une détection dans la zone angulaire correspondant à l'élément de mouvement ne provient pas d'un objet, mais de l'élément de mouvement, le capteur étant monté au niveau de l'axe de rotation et l'unité d'analyse étant conçue pour analyser les signaux de détection en fonction de la position angulaire du rayonnement détecté dans l'angle spatial et pour déterminer si un objet a été mesuré et/ou quelle est la position de l'objet mesuré, **caractérisé en ce qu'**un dispositif de mesure d'angle est prévu pour la mesure de la position angulaire de l'élément de mouvement et **en ce que** le dispositif de mesure d'angle comprend un levier qui est couplé mécaniquement à l'élément de mouvement et qui est conçu pour mesurer, au moyen du déplacement du levier lors du mouvement de l'élément de mouvement, la position angulaire de l'élément de mouvement.

2. Dispositif de surveillance selon la revendication 1, **caractérisé en ce que** le capteur est conçu pour la mesure de l'objet et pour la surveillance de l'angle spatial en tant que capteur de mesure pour la détermination de l'éloignement d'un objet, plus particulièrement en tant que capteur « time of flight » (capteur ToF).

3. Dispositif de surveillance selon l'une des revendications précédentes, **caractérisé en ce qu'**un dispositif de transmission est prévu, qui est conçu pour être relié avec un dispositif de contrôle pour le contrôle du dispositif d'entraînement de l'élément de mouvement et/ou avec le dispositif d'entraînement et pour transmettre, plus particulièrement pour recevoir ou pour émettre des signaux de données avec des informations concernant la position angulaire actuelle de l'élément de mouvement et du dispositif de contrôle et/ou du dispositif d'entraînement vers l'unité d'analyse.

4. Dispositif de surveillance selon l'une des revendications précédentes, **caractérisé en ce que** le capteur est conçu, en tant que capteur de sécurité pour l'arrêt du mouvement de l'élément de mouvement pour la prévention de collisions indésirables avec l'objet, le capteur de sécurité étant conçu pour surveiller une première zone de surveillance et pour arrêter le mouvement lors de la détection de l'objet à l'intérieur de la première zone de surveillance, et/ou en tant que capteur d'ouverture pour l'ouverture de l'élément de mouvement lors de l'approche de l'objet, le capteur d'ouverture étant conçu pour surveiller une deuxième zone de surveillance et pour placer, lors de la détection de l'objet à l'intérieur de la deuxième zone de surveillance, l'élément de mouvement dans l'état ouvert au moyen du dispositif d'entraînement.

5. Dispositif de surveillance selon l'une des revendications précédentes, **caractérisé en ce que** l'émetteur du capteur de mesure de l'objet et pour la surveillance de l'angle spatial est conçu pour émettre au moins l'ensemble de l'angle spatial à surveiller avec des rayons de détection.

6. Dispositif de surveillance selon l'une des revendications précédentes, **caractérisé en ce que** le récepteur du capteur pour la mesure de l'objet et pour la surveillance de l'angle spatial comprend au moins deux récepteurs partiels afin de détecter chacun un rayonnement électromagnétique provenant d'une zone partielle limitée de l'angle spatial à surveiller.

7. Dispositif de surveillance selon l'une des revendications précédentes, **caractérisé en ce que** le dispositif de surveillance comprend au moins deux capteurs pour la mesure d'un objet et pour la surveillance d'un angle spatial, un des au moins deux capteurs étant conçu et/ou orienté pour surveiller une zone angulaire spatiale côté ouverture sur un côté de l'élément de mouvement et un autre des au moins deux capteurs étant conçu et/ou orienté pour surveiller la zone angulaire spatiale opposée à l'ouverture sur l'autre côté de l'élément de mouvement.

8. Dispositif de surveillance selon l'une des revendications précédentes, **caractérisé en ce qu'**un dispositif de transmission est prévu pour la transmission d'informations et/ou d'instructions du capteur pour la surveillance de l'angle spatial côté ouverture vers le capteur pour la surveillance de l'angle spatial opposé à l'ouverture et/ou inversement.

9. Porte pivotante (1), avec un cadre de porte et un élément de mouvement pivotant autour d'un axe de rotation, qui est fixé de manière rotative au cadre de porte par l'intermédiaire d'une charnière, l'élément de mouvement étant pivotant entre un état ouvert et un état fermé d'une ouverture de la porte pivotante, **caractérisée en ce qu'**un dispositif de surveillance selon l'une des revendications précédentes est prévu.

10. Porte pivotante selon la revendication 9, **caractérisée en ce que** le capteur est disposé de manière stationnaire, plus particulièrement sur le linteau latéral et/ou sur l'axe de rotation et/ou à moins de 50 cm (centimètres) au-dessus du sol, plus particulièrement directement contre une charnière inférieure.

11. Porte pivotante selon la revendication 9, **caractérisée en ce que** le capteur pour la surveillance de l'angle spatial côté ouverture est monté sur le cadre de porte latéral et le capteur pour la surveillance de l'angle spatial opposé à l'ouverture est monté dans la zone supérieure du cadre de porte.
